Europäisches Patentamt

European Patent Office

Office européen des brevets

(11) Publication number: **0 248 004 B1**

# EUROPEAN PATENT SPECIFICATION

(45) Date of publication of patent specification: **24.02.93** (51) Int. Cl.5: **F04B 39/04**, F16J 15/56, F16K 39/00

(21) Application number: **86900397.0**

(22) Date of filing: **27.11.85**

(86) International application number:
**PCT/US85/02353**

(87) International publication number:
**WO 87/03341 (04.06.87 87/12)**

(54) BELLOWS SEAL.

(43) Date of publication of application:
**09.12.87 Bulletin 87/50**

(45) Publication of the grant of the patent:
**24.02.93 Bulletin 93/08**

(84) Designated Contracting States:
**AT BE CH DE FR GB IT LI LU NL SE**

(56) References cited:
US-A- 2 668 656     US-A- 3 235 269
US-A- 3 568 436     US-A- 3 875 806
US-A- 4 247 121     US-A- 4 424 008

(73) Proprietor: **Braun, Anton**
**6421 Warren Avenue**
**South Minneapolis, MN 55435(US)**

(72) Inventor: **Braun, Anton**
**6421 Warren Avenue**
**South Minneapolis, MN 55435(US)**

(74) Representative: **Hayward, Denis Edward Peter et al**
**Lloyd Wise, Tregear & Co. Norman House**
**105-109 Strand**
**London WC2R 0AE (GB)**

Rank Xerox (UK) Business Services
(3.10/3.5x/3.0.1)

# Description

This invention relates to hermetic type seals for reciprocating shaft mechanisms.

The invention is of general utility but of particular utility in Stirling engines and heat pump apparatus or systems wherein loss of refrigerant vapor or system gas is to be avoided. With the system operating or at rest, the high vapor pressure of the refrigerant results in leakage through conventional shaft seals. A diaphragm or a bellows seal avoids such leakage. However, for example, the high pressure on the outer surface of a thin flexible bellows, the interior of which is at ambient or atmospheric pressure, in combination with the stresses caused by the expansion and contraction of the bellows, causes distortion and rapid failure of the seal.

The present invention avoids this and other difficulties and disadvantages by providing means for controlling the pressure differential between the inside and outside of flexible seals, such as the inside and outside of a bellows type of seal, and by keeping maximum stress levels in each section caused by expansion and contraction to a minimum by appropriate division of the bellows and proper selection of the number of convolutions in each section and appropriate selection of the driving means for each section, as will now be described.

In US-A-2668656 there is described a reciprocating pump in which a bellows seal is provided between the piston and the cylinder. A vacuum pump removes lubricant leaking past a slide bearing of the piston shaft. In order to minimise the pressure differentials across the bellows wall the pump piston has a very short stroke and the bellows seal is contained in a substantially sealed housing which is either pre-evacuated or pre-charged with a pressure above atmospheric with the view to equalising the average pressures inside and outside the bellows during operation.

US-A-3568436 discloses a reciprocating engine in which the piston rod is sealed by a primary gland seal and a secondary rolling diaphragm seal. To maintain the pressure differential on the rolling diaphragm within a tolerable range, a system is provided for automatically pressurising or venting the chamber around the piston rod between the primary and secondary seals.

According to the present invention, there is provided a control apparatus for a bellows-type of hermetic seal around a reciprocable shaft; said bellows seal having a fixed open end and a movable end and having a first of its internal and external surfaces exposed to a substantially constant pressure, such as the ambient pressure around said apparatus, and the second opposite surface exposed to variable pressure within a chamber wherein the pressure may tend to rise sufficiently to create potentially harmful differentials between the external and internal pressures on the bellows, said apparatus comprising a first means for establishing a sub-ambient pressure and valve means for automatically connecting said sub-ambient pressure in said first means to that side of the bellows where lies said second surface exposed to variable pressure whenever said pressure differential is higher than a determined amount, whereby the pressure differential between the pressures inside and outside of said bellows seal is maintained at a desired level, and means to concurrently actuate said movable end and at least one intermediate portion of the bellows seal as the bellows expands and contracts.

Arrangements according to the invention will now be described by way of example and with reference to the accompanying drawings, in which:-

Figure 1 is a schematic longitudinal section taken at section lines 1-1 of Figures 2-4 showing one embodiment of the invention as applied to the compressor mechanism of a heat pump,

Figures 2, 3 and 4 are partial sectional views taken at section lines 2-2, 3-3 and 4-4 of Figure 1,

Figure 5 is a partial sectional elevation at section line 5-5 of Figure 4,

Figure 6 is a schematic longitudinal section of a second embodiment of the invention taken at section line 6-6 of Figure 8,

Figure 7 represents a section taken at section line 7-7 of Figure 8,

Figure 8 represents a section taken at section line 8-8 of Figure 6,

Figure 9 is a schematic longitudinal section of another embodiment of the invention,

Figure 10 is a section taken at line 10-10 of Figure 9,

Figure 11 is a section taken at line 11-11 of Figure 9,

Figure 12 is a partial sectional view of a further embodiment of the invention.

Figure 13 is a schematic view of another embodiment,

Figure 14 is a sectional view taken along line 14-14 in Figure 13,

Figure 15 is a sectional view taken long line 15-15 in Figure 14, and

Figure 16 is a fragmentary view of a compressor piston having two shafts for driving auxiliary pumps.

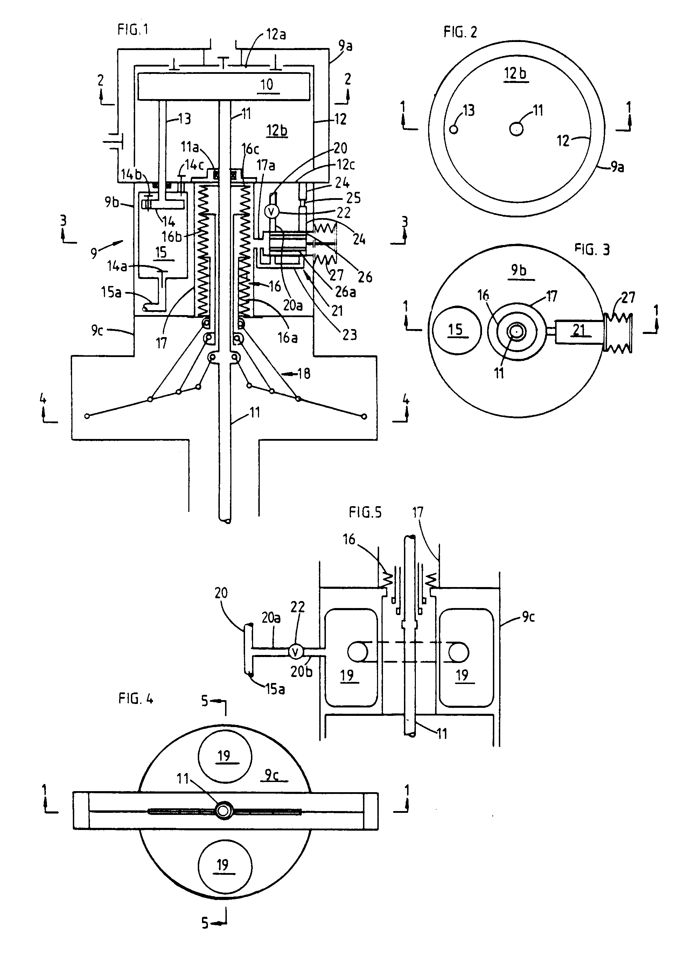

In Figures 1-5, the compressor of a heat pump has a housing 9, and a piston 10 on a shaft 11 operates within a cylinder 12 in the upper housing section 9a and actuates a sub-shaft 13 connected to a piston 14 of a sub-ambient pressure or vacuum pump 15. Bellows 16, within a chamber 17, is sealed at its upper end to shaft 11 and at its lower end to a wall extending between chamber 17 and the wall of mid housing section 9b and forms a hermetic seal for the cylinder chamber 12b against the ambient atmosphere to which the interior of the bellows is exposed through its open lower end communicating with the lower housing section 9c. The bellows operates concurrently with the-shaft 11, which extends through a gland type of seal 11a in the lower cylinder end wall 12c, and the maximum mechanical stresses due to expansion and contraction of the convolutions of the bellows are drastically reduced by a lever and tube apparatus 18 contained principally in housing section 9c and described in my U S Patent No 4,424,008.

Bellows stresses normally introduced by differential pressure are subtantially neutralized by application of the present invention, as will now be described.

The pump 15 is connected to sub-ambient pressure or vacuum chamber or chambers 19 through passageway or line 15a, passages 20a, 20b, valve 22 and a check valve 14a. The partial vacuum established during operation of the the machine is maintained in chamber 19 during shutdown by closing valve 22. The chamber 19 need be only large enough to provide for the Starting of the engine, as described hereinafter. The pump needs only to have enough capacity to provide sufficient vacuum to relieve excessive pressure in chamber 17 during operation of the engine and to quickly store a vacuum in chamber 19 for starting purposes in case the compressor is subject to short periods of operation. A line 20 connects chamber 19 to a sleeve or plunger valve 21. Valve 21 connects with the bellows chamber 17 through a manifold 23 and line 17a and with cylinder chamber 12b through line 24 which is restricted by an orifice 25. A plunger or piston 26, which has at least one bore 26a therethrough, is self-adjusting to variations in pressure around bellows 16 transmitted through bore or bores 26a by a rod connection with a control bellows 27 located in housing section 9b or 9c or in the atmosphere.

During rest periods, piston 10 is forced to the expansion or lower position by the pressure of the gas or refrigerant in the upper cylinder chamber 12a, and the bellows 16 is compressed and may be exposed to full gas or vapor pressure, due to leakage past seal 11a and plunger 26. At startup, valve 22 is opened causing the pressure around bellows 16 to be immediately reduced approximately to ambient. During operation of the compressor, high pressure in the bellows 27 causes the valve 21 to open line 20a to the vacuum chamber, which is kept evacuated by the pump 15; low pressure in bellows 27 conversely causes valve 21 to shut off or close line 20a and connect chamber 17 through manifold 23, line 24 and orifice 25 to the higher pressure chamber 12b, and the pressure around bellows 16 is thus maintained substantially ambient.

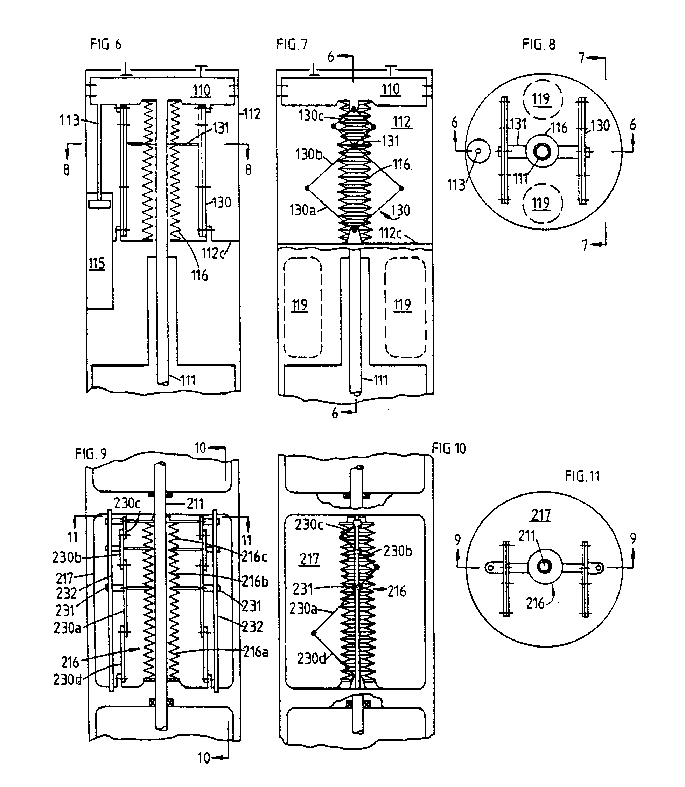

The lines 15a and 20 in Figure 1 connect with the lines 15a and 20 in Figure 5 and the plunger 26 is illustrated as being in its neutral position across both lines 20a and 24. In operation, plunger or piston 26 will constantly move back and forth as the bellows 27 responds to increases and decreases in pressure in chamber 17. The pressure in cylinder chamber 12b will always be somewhat higher than the ambient or atmospheric pressure, inside bellows 16 and housing section 9c, due to vapor pressure of the refrigerant being pumped according to the principle use of the compressor. However, the line 24 could be connected to chamber 12a rather than chamber 12b.

While the primary function of the pump and vacuum chambers is to relieve pressure in chamber 17 to approximately that inside the bellows, residual vacuum in the chambers 19 is also useful in starting the engine/compressor. A line (not shown) to chamber 12a from the vacuum chambers may be briefly opened to lower the cylinder pressure and draw the piston 10 toward its compressor top dead center position, which action also puts a charge in the cylinder of the prime mover. The closing of the line, thus allowing the vapor pressure in chamber 12a to build up again, will aid in the return of piston 10 back toward its bottom dead center position, thereby compressing the charge in the prime mover sufficiently for firing. Means may be provided to move the piston in either or both directions for starting purposes, and a positive (soft) seal may be provided around shafts 11 and 13 and check valve 14c and line 24 to prevent leakage when the compressor is at rest to reduce the size or eliminate the need for chambers 19.

It will be seen that the entire apparatus may be self-contained with vacuum pump, plunger valve and vacuum chambers all located within the housing of the compressor which, however, is of somewhat extended length in the form of Figures 1-5. A more compact modification is shown in Figures 6-8. Here the bellows 116 is sealed directly to the piston 110 and to the lower end wall 112c of the cylinder 112. The action of the bellows is controlled by a lazytongs 130 of crossed links 130a, 130b and 130c, attached to a support ring 131, extending from convolutions of the bellows. Crossed links 130a are normally long for large intervals and links 130c are short for shorter intervals. Vacuum pump 115 evacuates vacuum chambers 119, which may have connections through appropriate valves and lines (not shown) to the cylinder 112 above and below piston 110 in a manner and for purposes already described with respect to Figures 1-6.

A second feature of the apparatus lies in having the number of identical convolutions in each of a plurality of sections of the bellows seal decrease sequentially from the fixed end of the bellows to the movable end thereof according to the formula:

$$\frac{N_2}{N_T} = \frac{S_2}{S_T}$$

Where $N_2$ is the number of convolutions in one of a plurality of sections of a bellows, $N_T$ is the total number of identical convolutions in the entire bellows, $S_2$ is the amount of elongation or contraction of the section, $S_T$ is the total elongation or contraction of the entire bellows during operation of the machine in which the seal is used.

Another advantage of the system of Figures 6-8 lies in the reduced diameter of the bellows, made possible by placing the mechanism for actuating the intermediate portion or portions of the bellows on the outside of the bellows.

Since the pressure on the outside and inside surfaces of the bellows is regulated by the action of the plunger valve 21 to approximately ambient and since a significantly lower pressure is maintained by the pump 115 in the vacuum chambers, startup is easily accomplished as previously indicated.

Another embodiment of the invention is shown in Figures 9-11. It has a bellows seal arrangement similar to that of Figures 1-5 but having unequal length bellows sections 216a, 216b and 216c with unequal length levers 230a, 230b, 230c and 230d for the actuating mechanism between the piston rod and the cylinder. The intermediate portions of the bellows are connected to short guide sleeves 231 that are slidable on guide rods 232.

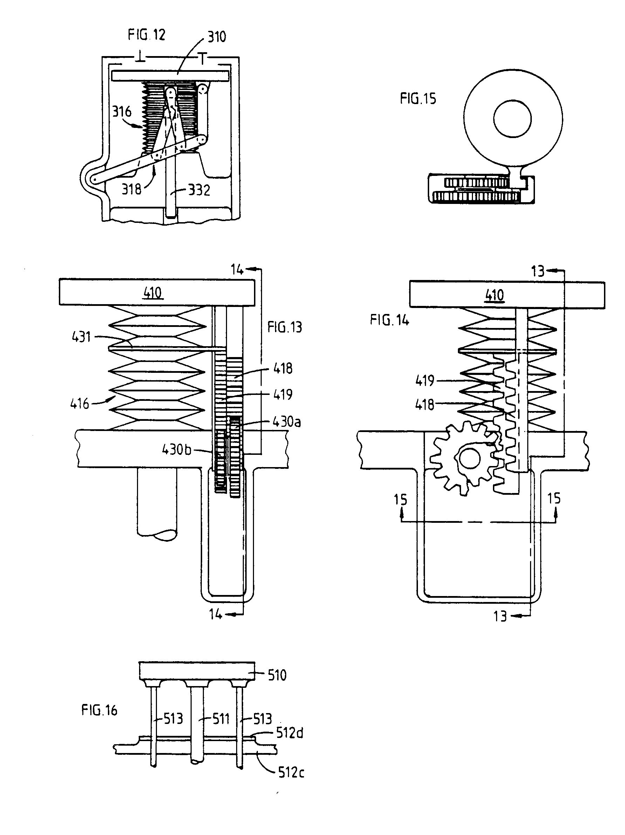

A still further embodiment of the invention is shown in Figure 12 wherein bellows 316 is connected to the compressor piston, and intermediate portions of the bellows are connected to externally located driving links 318 through short guide sleeves around movable guide rods 332 connected to piston 310 on opposite sides of the bellows. This provides a more compact arrangement than in the modification of Figures 9-11.

The modification of Figures 13-15 makes use of a pair of racks, one, 418, connected to piston 410 and the other, 419, connected to intermediate portion 431 of the bellows 416, with a large diameter gear 430a engaging rack 418 and an integral or attached smaller diameter gear 430b engaging the rack 419. This arrangement provides the same relative movements between the bellows sections as in the other modifications.

Figure 16 shows how a compressor piston 510 may be designed to actuate pump shafts 513 passing through a cylinder end wall 512c and to seat on a soft pad 512d to prevent leakage through the wall around the shafts and piston rod.

It is to be understood that in other modifications the ambient pressure could be on the outside of the bellows seal with the inside being exposed to the variable pressure and controlled in a similar manner. Also, in some applications, it may be desirable to have a differential in pressures other than ambient on opposite sides of the bellows seal so long as they are controlled pressures.

**Claims**

1. Control apparatus for a bellows-type of hermetic seal (16, 116, 216, 316, 416) around a reciprocable shaft (11, 111, 211); said bellows seal having a fixed open end and a movable end and having a first of its internal and external surfaces exposed to a substantially constant pressure, such as the ambient pressure around said apparatus, and the second opposite surface exposed to variable pressure within a chamber (17) wherein the pressure may tend to rise sufficiently to create potentially harmful differentials between the external and internal pressures on the bellows, said apparatus comprising a first means (15, 115) for establishing a sub-ambient pressure and valve means (21) for automatically connecting said sub-ambient pressure in said first means to that side of the bellows where lies said second surface exposed to variable pressure whenever said pressure differential is higher than a determined amount, whereby the pressure differential between the pressures inside and outside of said bellows seal is maintained at a desired level, and means (18; 130; 230, 231, 232; 318, 332; 418, 419, 430) to concurrently actuate said movable end and at least one intermediate portion of the bellows seal as the bellows expands and contracts.

2. Apparatus as defined in Claim 1, wherein said first means comprises as evacuating pump.

3. Apparatus as defined in Claim 1 or Claim 2, wherein said shaft is attached to a piston (10) of a compressor and said valve means is also movable to connect that side of the bellows where lies said second surface alternatively to a source of higher pressure (12b) when the pressure on said second surface is lower than a desired pressure with respect to that on said first surface.

4. Apparatus as defined in any preceding claim, wherein said first means comprises a reciprocating evacuating pump having a pump shaft (13, 113) parallel to and reciprocating with said reciprocable shaft and being connected to a lower than ambient pressure chamber (19, 119).

5. Apparatus as defined in Claim 3 or Claims 3 and 4, wherein said piston drives said first means.

6. Apparatus as defined in any preceding claim, wherein said bellows is concurrently actuated by a plurality of intermediate actuating means dividing said bellows into an axial series of sections (16a, 16b, 16c).

7. Apparatus as defined in Claim 6, wherein said actuating means comprise a lazytongs type of mechanism (130) extending between a piston (110) connected to said reciprocable shaft (111) and an end wall (112c) of a cylinder (112) in which the piston operates.

8. Apparatus as defined in Claim 7, comprising an axial series of interconnected spaced pairs of lazytong links (130a, 130b, 130c) of different lengths.

9. Apparatus as defined in any preceding claim, wherein said second of said bellows surfaces is the outside surface of said bellows.

10. Apparatus as defined in any of Claims 1 to 6, wherein said reciprocable shaft extends through a gland type of seal (11a) into said variable pressure chamber.

11. Apparatus as defined in any of Claims 1 to 9, wherein the bellows actuating means comprise means for dividing the convolutions of the bellows seal into an axial series of bellows sections having unequal numbers of convolutions with the number of convolutions per section decreasing sequentially from the fixed end of the bellows seal to the movable end thereof, and driving means to concurrently actuate the bellows sections when the reciprocable shaft is reciprocated so as to elongate or shorten the length of each section by an amount substantially proportional to the number of convolutions in the section.

12. Apparatus as defined in Claim 11, wherein the ratio of the number of convolutions in any bellows section to the total number of convolutions is substantially equal to the ratio of the elongation or contraction of any bellows section to the total elongation or contraction of the bellows.

13. Apparatus as defined in Claim 11 or Claim 12, wherein said driving means include racks (418, 419) and pinions (430a, 430b).

14. Apparatus as defined in any of Claims 11 to 13, wherein said bellows seal has the movable end thereof sealingly connected to a compressor piston and the fixed end thereof sealingly connected to a wall of a cylinder in which the piston operates.

**Patentansprüche**

1. Steuervorrichtung für eine hermetische Balgdichtung (16, 116, 216, 316, 416) um eine hin- und herbewegbare Welle (11, 111, 211), wobei besagte Balgdichtung ein festes offenes Ende und ein bewegliches Ende aufweist und wobei eine erste ihrer inneren und äußeren Flächen einem im wesentlichen konstanten Druck, wie beispielsweise dem Umgebungsdruck der besagten Vorrichtung, und die zweite, entgegengesetzte Fläche einem variablen Druck innerhalb einer Kammer (17) ausgesetzt ist, in der der Druck genügend hoch ansteigen kann, um gefährliche Unterschiede zwischen den Außen- und Innendrücken am Balg zu erzeugen, wobei besagte Vorrichtung ein erstes Mittel (15, 115) zum Bilden eines Umgebungsunterdrucks und ein Ventilmittel zum automatischen Verbinden des besagten Umgebungsunterdrucks in besagtem ersten Mittel mit der Seite des Balgs, wo besagte zweite Fläche dem variablen Druck ausgesetzt ist, wenn besagte Druckdifferenz höher als ein bestimmter Betrag ist, wodurch die Druckdifferenz innerhalb und außerhalb besagter Balgdichtung an einem gewünschten Wert gehalten wird, und Mittel (18; 130; 230; 231; 232; 318; 332; 418; 419; 430) aufweist, um besagtes bewegliches Ende und wenigstens ein Zwischenteil der Balgdichtung gleichzeitig zu betätigen, wenn der Balg sich ausdehnt und zusammenzieht.

2. Vorrichtung nach Anspruch 1, wobei besagtes erstes Mittel eine Evakuierpumpe aufweist.

3. Vorrichtung nach Anspruch 1 oder 2, wobei besagte Welle an einem Kolben (10) eines Kompressors befestigt ist und besagtes Ventilmittel ebenfalls beweglich ist und die Seite des Balgs, wo besagte zweite Fläche liegt, alternativ mit einer Quelle höheren Drucks (12b) verbindet, wenn der Druck auf besagter zweiter Fläche niedriger als ein gewünschter Druck relativ zu dem auf besagter erster Fläche ist.

4. Vorrichtung nach einem der vorhergehenden Ansprüche, wobei besagtes erstes Mittel eine Kolben-Evakuierpumpe mit einer Pumpenwelle (13, 113) aufweist, die parallel zu besagter hin- und herbewegbarer Welle angeordnet ist und sich mit dieser bewegt, und wobei besagte Kolben-Evakuierpumpe mit einer Kammer (19, 119) mit einem niedrigeren Druck als dem Umgebungsdruck verbunden ist.

5. Vorrichtung nach Anspruch 3 oder den Ansprüchen 3 und 4, wobei besagter Kolben besagtes erstes Mittel antreibt.

6. Vorrichtung nach einem der vorhergehenden Ansprüche, wobei besagter Kolben gleichzeitig von einer Vielzahl von Betätigungszwischenmitteln betätigt wird, die besagten Balg in eine axiale Folge von Abschnitten (16a, 16b, 16c) aufteilen.

7. Vorrichtung nach Anspruch 6, wobei besagtes Betätigungsmittel einen scherenspreizförmigen Mechanismus (130) aufweist, der sich zwischen einem mit besagter hin- und herbewegbarer Welle (111) verbundenen Kolben (110) und einer Endwand (112c) eines Zylinders (112) erstreckt, in dem der Kolben arbeitet.

8. Vorrichtung nach Anspruch 7, mit einer axialen Folge von untereinander verbundenen Paaren von Verbindungselementen (130a, 130b, 130c) des Scherenspreiztyps mit verschiedenen Längen.

9. Vorrichtung nach einem der vorhergehenden Ansprüche, wobei besagte zweite Fläche des besagten Balgs die Außenfläche des besagten Balgs ist.

10. Vorrichtung nach einem der Ansprüche 1 bis 6, wobei besagte hin- und herbewegbare Welle sich durch eine verschraubungsartige Dichtung (11a) in besagte Kammer mit variablem Druck erstreckt.

11. Vorrichtung nach einem der Ansprüche 1 bis 9, wobei das den Balg betätigende Mittel weiterhin Mittel zum Aufteilen der Faltungen der Balgdichtung in eine axiale Folge von Balgabschnitten mit ungleicher Anzahl von Faltungen, wobei die Anzahl der Faltungen pro Abschnitt nacheinander vom festen Ende der Balgdichtung zu deren beweglichen Ende abnimmt, und Antriebsmittel zum gleichzeitigen Betätigen der Balgabschnitte aufweist, wenn die hin- und herbewegbare Welle bewegt wird, um so die Länge jedes Abschnitts um einen Betrag zu verlängern oder zu verkürzen, der im wesentlichen proportional zur Anzahl der Faltungen in diesem Abschnitt ist.

12. Vorrichtung nach Anspruch 11, wobei das Verhältnis der Anzahl der Faltungen in irgendeinem Balgabschnitt zur Gesamtzahl der Faltungen im wesentlichen gleich dem Verhältnis der Verlängerung oder Verkürzung irgendeines Balgabschnitts zur Gesamtverlängerung oder -verkürzung des Balgs ist.

13. Vorrichtung nach Anspruch 11 oder 12, wobei besagtes Antriebsmittel Zahnstangen (418, 419) und Ritzel (430a, 430b) aufweist.

14. Vorrichtung nach einem der Ansprüche 11 bis 13, wobei das bewegliche Ende besagter Balgdichtung abdichtend mit einem Kompressorkolben und deren festes Ende abdichtend mit einer Wand eines Zylinders verbunden ist, in dem der Kolben arbeitet.

**Revendications**

1. Appareil de contrôle pour un joint d'étanchéité de type à soufflet (16, 116, 216, 316, 416) disposé autour d'un arbre (11, 111, 211) pouvant se déplacer en va-et-vient; ledit joint d'étanchéité à soufflet présentant une extrémité ouverte fixe et une extrémité mobile, et présentant une première surface, parmi ses surfaces interne et externe, qui est exposée à une pression sensiblement constante, telle que la pression ambiante régnant autour dudit appareil, et la seconde surfaces opposée étant exposée à une pression variable régnant dans une chambre (17), dans laquelle la pression peut tendre à augmenter suffisamment pour créer des différences potentiellement nuisibles entre les pression interne et externe s'exerçant sur le soufflet, ledit appareil comprenant un premier moyen (15, 115) pour établir une pression ambiante, et un moyen servant de soupape (21) pour relier automatiquement ladite pression ambiante régnant dans ledit premier moyen, au côté du soufflet sur lequel se situe ladite seconde surface exposée à la pression variable, à chaque fois que ladite différence de pression est supérieure à une valeur déterminée, de manière que la différence de pression entre les pressions régnant à l'intérieur et à l'extérieur dudit joint d'étanchéité à soufflet soit maintenue à un niveau souhaité, et des moyens (18; 130; 230, 231, 232; 318, 332; 418, 419, 430) pour actionner simultanément ladite extrémité mobile et au moins une partie intermédiaire du joint d'étanchéité du type à soufflet, lorsque le soufflet se détend ou se contracte.

2. Appareil selon la revendication 1, dans lequel ledit premier moyen constitue une pompe d'évacuation.

3. Appareil selon la revendication 1 ou 2, dans lequel ledit arbre est fixé à un piston (10) d'un compresseur, et ledit moyen servant de soupape est également susceptible de se déplacer pour relier ce côté du soufflet sur lequel se trouve ladite seconde surface, de manière alternée à une source de pression plus élevée (12b), lorsque la pression s'exerçant sur ladite seconde surface est inférieure à une pression souhaitée, par rapport à celle s'exerçant sur ladite première surface.

4. Appareil selon l'une quelconque des revendications précédentes, dans lequel ledit premier moyen comprend une pompe d'évacuation à déplacement en va-et-vient, présentant un arbre de pompe (13, 113) parallèle à, et se déplaçant en va-et-vient par rapport audit arbre susceptible de se déplacer en va-et-vient, et relié à une chambre de pression (19, 119) dans laquelle règne une pression inférieure à la pression ambiante.

5. Appareil selon la revendication 3, ou les revendications 3 et 4, dans lequel ledit piston entraîne ledit premier moyen.

6. Appareil sel on l'une quelconque des revendications précédentes, dans lequel ledit soufflet est actionné simultanément par une pluralité de moyens d'actionnement intermédiaires divisant ledit soufflet en une série de sections axiales (16a, 16b, 16c).

7. Appareil selon la revendication 6, dans lequel lesdits moyens d'actionnement comprennent un mécanisme de type à tendeur en ciseaux (130) s'étendant entre un piston (110) relié audit arbre à déplacement en va-et-vient (111) et à une paroi d'extrémité (112c) d'un cylindre (112), dans lequel fonctionne le piston.

8. Appareil sel on la revendication 7, comprenant une série axiale de couples espacés interconnectés de liaisons de tendeur en ciseaux (130a, 130b, 130c) de différentes longueurs.

9. Appareil selon l'une quelconque des revendications précédentes, dans lequel ladite seconde surface parmi lesdites surfaces de soufflet est la surface extérieure dudit soufflet.

10. Appareil selon l'une quelconque des revendications 1 à 6, dans lequel ledit arbre à déplacement en va-et-vient traverse un joint d'étanchéité de type à presse-étoupe (11a), pour aller dans ladite chambre de pression variable.

11. Appareil selon l'une quelconque des revendications 1 à 9, dans lequel les moyens d'actionnement de soufflet comprennent des moyens pour diviser les circonvolutions du joint d'étanchéité à soufflet en un série axiale de sections de soufflet dotées de nombres de circonvolutions inégaux, le nombre de circonvolutions par section diminuant séquentiellement depuis l'extrémité fixe du joint d'étanchéité à soufflet, vers son extrémité mobile, et des moyens d'entraînement servant à actionner simultanément les sections de soufflet lorsque l'arbre à déplacement en va-et-vient est déplacé en va-et-vient, de manière à prolonger ou à diminuer la longueur de chaque section d'une valeur sensiblement proportionnelle au nombre de circonvolutions présentes dans la section.

12. Appareil selon la revendication 11, dans lequel le rapport entre le nombre de circonvolutions présentes dans une section de soufflet quelconque, et le nombre de circonvolutions total est sensiblement égal au rapport entre le prolongement ou la contraction d'une section de soufflet quelconque, et le prolongement ou la contraction totaux du soufflet.

13. Appareil selon la revendication 11 ou 12, dans lequel lesdits moyens d'entraînement comprennent des crémaillères (418, 419) et des pignons (430a, 430b).

14. Appareil selon l'une quelconque des revendications 11 à 13, dans lequel ledit joint d'étanchéité à soufflet présente son extrémité mobile reliée de manière étanche à un piston de compresseur, et son extrémité fixe reliée de manière étanché à une paroi d'un cylindre dans lequel fonctionne le piston.

FIG. 1

FIG. 2

FIG. 3

FIG. 4

FIG. 5

FIG.6

FIG.7

FIG.8

FIG.9

FIG.10

FIG.11

FIG.12

310

316

318    332

FIG.15

14

410

FIG.13

431

418

419

430a

430b

14

13

410

FIG.14

419

418

15    15

13

FIG.16

510

513    511    513

512d

512c